# EUROPÄISCHE PATENTSCHRIFT

(11) **EP 1 742 316 B1**
(45) Veröffentlichungstag und Bekanntmachung des Hinweises auf die Patenterteilung: **14.08.2013**
(21) Anmeldenummer: 06450091.1
(22) Anmeldetag: 30.06.2006
(51) Int. Cl.: H02B 1/30

(54) **Installationskasten**
Installation box
Boîtier d'installation

(30) Priorität: 05.07.2005 AT 11352005
(43) Veröffentlichungstag der Anmeldung: 10.01.2007
(73) Patentinhaber: Richard Lesonitzky GmbH, 1180 Wien (AT)
(72) Erfinder: Lesonitzky, Richard, 1180 Wien (AT)
(74) Vertreter: Keschmann, Marc

(56) Entgegenhaltungen:
- DE-A1- 3 106 277
- DE-U1- 7 802 731

## Beschreibung

Die Erfindung bezieht sich auf einen Installationskasten, wie z.B. Elektrokasten, Elektrozählerkasten, Gaszählerkasten od. dgl., mit Seitenwänden, welche eine umlaufende Kastenwand ausbilden, und Eckverbindern zum Verbinden der Seitenwände, wobei die Seitenwände von Kammerprofilplatten mit einer Mehrzahl von parallel zur Plattenebene verlaufenden Kammern gebildet sind und die Eckverbinder mit dem Querschnitt wenigstens eines Teiles der Kammerquerschnitte entsprechenden Steckprofilen ausgebildet sind, welche in stirnseitige Öffnungen der Kammern einsteckbar sind.

Installationskästen können als elektrische Schalt- und/oder Sicherungskästen ausgebildet sein und werden als Unterputz- oder Aufputzvarianten gefertigt. Ausbildungen der eingangs genannten Art sind beispielsweise der DE 7802731 U1 zu entnehmen. Bei Aufbau eines Installationskastens als Sicherungskasten müssen die elektrischen Zuleitungen durch eine entsprechende Zwischenwand abgedeckt werden, wobei in der Regel die Betätigungselemente von Sicherungsschaltern oder Fehlerstromschutzschaltern aus Durchbrechungen einer derartigen Zwischenwand vorragen. Üblich sind auch sogenannte Schienensysteme, auf welchen genormte Bauteile angeordnet werden können, um eine gewünschte Funktionalität mit wenigen austauschbaren Elementen zu gewährleisten. Bei der Ausbildung als Unterputzbaukasten müssen die Wandteile eines derartigen Installationskastens relativ rauen Beanspruchungen Stand halten und insbesondere die Last von aufgelegten Ziegeln oder anderen Baumaterialien ohne Deformation bzw. Zerstörung überleben. Auch im Fall von Aufputzkästen ist ein entsprechendes Maß an mechanischer Festigkeit gefordert.

Ziel der vorliegenden Erfindung ist es, einen modular aufgebauten Installationskasten zu schaffen, bei welchem eine geringe Anzahl gleicher Bauteile für den Zusammenbau unterschiedlicher Installationskästen herangezogen werden kann und gleichzeitig auch die jeweils geforderte mechanische Stabilität in einfacher Weise gewährleistet werden kann. Die Kästen sollen dabei bei entsprechend hoher Stabilität mit unterschiedlicher Tiefe ausgebildet werden können. Zur Lösung dieser Aufgabe besteht der erfindungsgemäße Installationskasten im Wesentlichen darin, dass eine Mehrzahl von Kammern der die Seitenwände bildenden Kammerprofilplatten mit voneinander verschiedenen Querschnitten vorgesehen ist und zwischen einzelnen oder einer Gruppe von gleichen Querschnitt aufweisenden Kammern über die Breite der Kammerprofilplatten verteilt Kammern mit von diesen Querschnitten verschiedenen Querschnitten angeordnet sind, wobei weiters die Kammerprofilplatten der Seitenwände an einer Seite parallel zur Achse von Kammern verlaufende Nuten aufweisen und dass ein Teil der in Achsrichtung der Kammern verlaufenden Nuten gestuft ausgebildet ist und wenigstens zwei jeweils benachbarte unterschiedliche Nuttiefen ausbildet.

Dadurch, dass Kammerprofilplatten mit einer Mehrzahl von parallel zur Plattenebene verlaufenden Kammern eingesetzt werden und entsprechende Eckverbinder vorgesehen sind, welche in stirnseitige Öffnungen der Kammern einsteckbar sind, wird die Möglichkeit geschaffen, derartige Kammerprofilplatten durch einfaches Zersägen in unterschiedlich breite Platten zu zerlegen und bei entsprechenden jeweils gewählten Breiten und gewählter Teilung der Eckverbinder wiederum zu einem mehr oder minder tiefen Kasten zusammenzubauen.

Um die Flexibilität der Einbauten insbesondere bei Ausbildung des Installationskastens als Elektrokasten zu erhöhen und die entsprechenden Zwischenwandelemente und Rückwandelemente in der jeweils gewünschten Tiefe anordnen zu können, ist mit Vorteil die Ausbildung so getroffen, dass die Kammerprofilplatten an einer Seite parallel zur Achse von Kammern verlaufende Nuten aufweisen. Erfindungsgemäß ist hierbei die Ausbildung so getroffen, dass ein Teil der in Achsrichtung der Kammern verlaufenden Nuten gestuft ausgebildet ist und wenigstens zwei jeweils benachbarte unterschiedliche Nuttiefen ausbildet, wobei in diesem Fall in einer derartigen gestuft ausgebildeten Nut jeweils zwei Wandelemente angeordnet werden können, welche nach Art von Schiebetüren relativ zu einander verschiebbar sein können und auf die Art und Weise unterschiedliche Querschnitte freigeben können. Die abgestützte Ausbildung der Nut erlaubt es aber auch entweder zwei relativ zueinander verschiebliche Platten oder eine entsprechend dickere und damit steifere Platte einzusetzen. In die Nut kann in Richtung der Plattenstärke jeweils eine Kammer mit der Nut entsprechender Breite anschließen, welche das Trennen der Profilkammerplatte an vordefinierten Stellen erleichtert.

Die Mehrzahl der voneinander verschiedenen Querschnitt aufweisenden Kammern der Kammerprofilplatten erlaubt nun auch zusätzlich zu Eckverbindern in entsprechende Profilkammern Versteifungselemente einzubringen, um die mechanische Stabilität zu gewährleisten. Eine entsprechende Unterteilung der Breite der Kammerprofilplatten in unterschiedliche Kammern erlaubt hierbei ein hohes Maß an Flexibilität bei der Ausgestaltung des Installationskastens im Bezug auf den inneren Aufbau und die gewünschte mechanische Festigkeit, sodass Unterputzkästen und Aufputzkästen ebenso wie Elektrokästen, Elektrozählerkästen, Gaszählerkästen bzw. andere Installationsschränke mit immer wieder gleichen Elementen aufgebaut werden können. Dadurch, dass die Kammerprofilplatten eine Mehrzahl von Kammern mit voneinander verschiedenen Querschnitten aufweisen, wird es möglich in Kammern mit Querschnitten, welche beispielsweise nicht einem Steckprofil des Eckverbinders entsprechen, Versteifungselemente oder andere funktionale Elemente unterzubringen. Die Ausbildung kann hierbei bevorzugt so getroffen sein, dass ein Teil der Kammerprofile mit gegenüber den stirnseitig offenen Kammern für die Aufnahme von Steckprofilen der Eckverbinder kleinerem Querschnitt für die Aufnahme von Verstärkungsbändern bzw. Versteifungsstäben ausgebildet ist.

In analoger Weise wie die Nut der Kammerprofilplatten, welche naturgemäß auch für die Aufnahme von Rückwandplatten des Installationskastens geeignet sein können, ist es vorteilhaft, auch die Steckprofile entsprechend auszubilden, wobei vorzugsweise die Ausbildung so getroffen ist, dass zwischen Steckprofilen der Eckverbinder Nuten für die Aufnahme von ebenen Wandteilen angeordnet sind, welche in Nuten der Kammerprofilplatten eintauchen. Gemeinsam mit den entsprechend fluchtenden Nuten der Kammerprofilplatten ergibt sich somit beim Zusammenbau unmittelbar eine sichere Aufnahme für ebene Wandelemente und insbesondere Rück- oder Zwischenwandelemente.

Um durch einfaches Zusammenstecken der steckbaren Eckverbinder mit den Kammerprofilplatten unmittelbar ein sicheres Verrasten und damit ein hohes Maß an Stabilität der Verbindung zu gewährleisten, ist die Ausbildung mit Vorteil so getroffen, dass die Steckprofile der Eckverbinder und die Wände der Kammerprofilplatten miteinander zusammenwirkende Verriegelungsglieder, insbesondere Vorsprünge und Ausnehmungen für die Aufnahme der Vorsprünge, aufweisen.

Die Erfindung bezieht sich im Übrigen auch auf die Kammerprofilplatte, die für die Ausbildung des oben definierten Installationskastens geeignet ist, um durch den Zusammenbau mit einem entsprechenden steckbaren Eckverbinder einen derartigen Installationskasten zu ergeben, sowie auf Eckverbinder, welche für den Zusammenbau mit Kammerprofilplatten der oben definierten Art geeignet sind, um auf diese Weise einen Installationskasten der oben definierten Art zu schaffen. Der Querschnitt der Steckprofile ist hierbei vorzugsweise verformbar bzw. komprimierbar, um den Zusammenbau zu erleichtern.

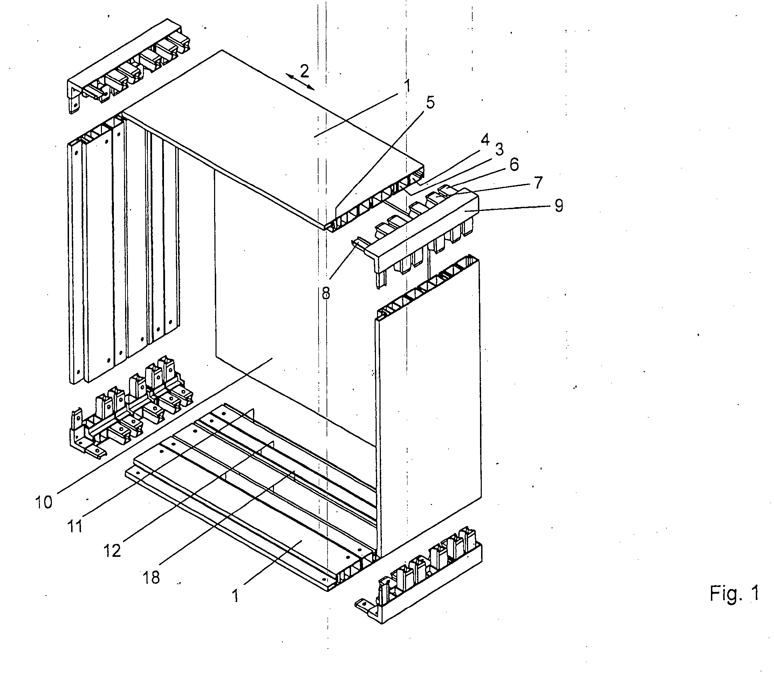

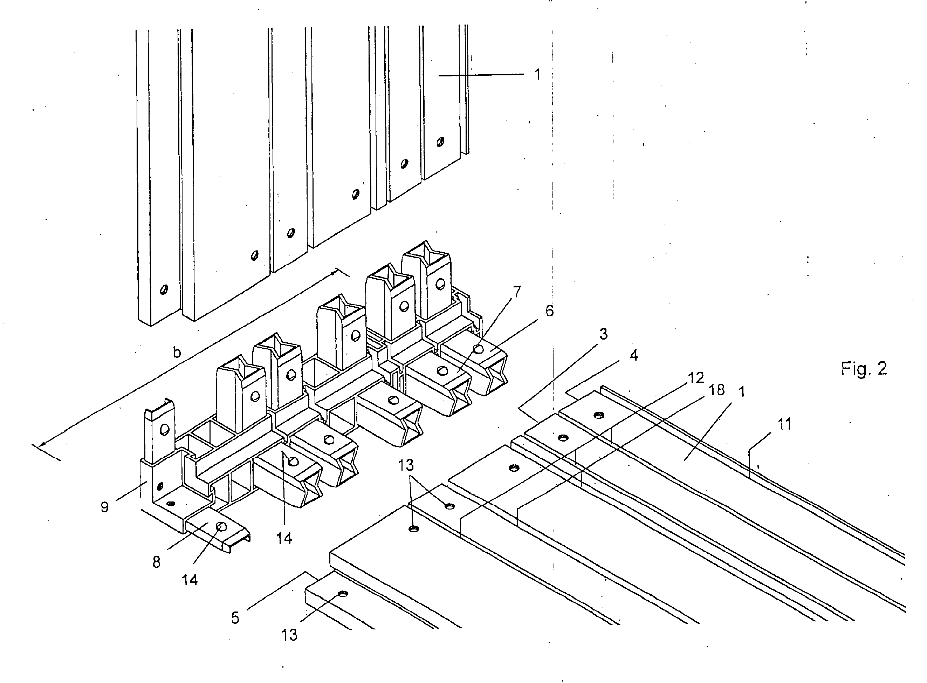

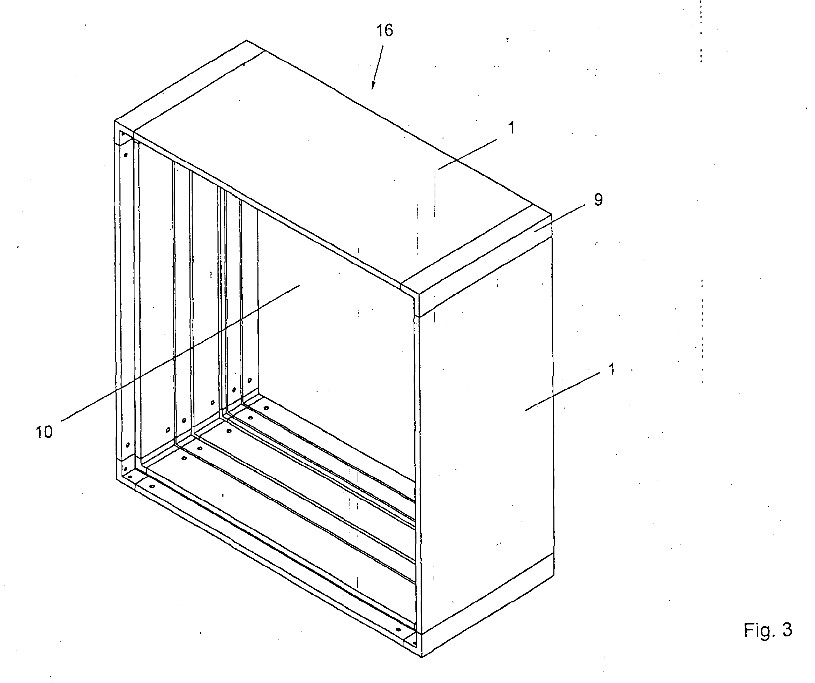

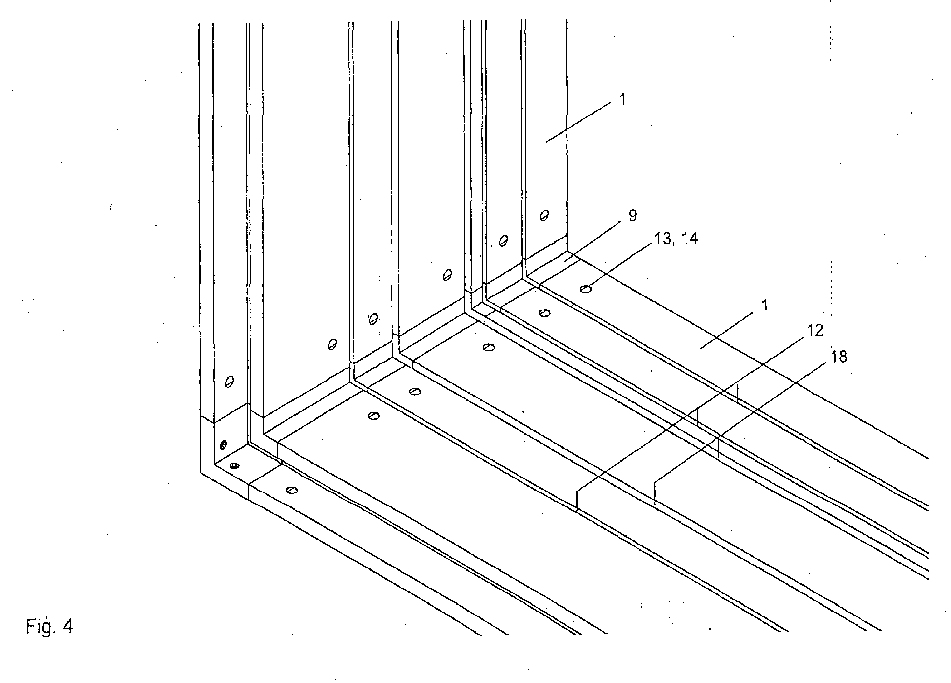

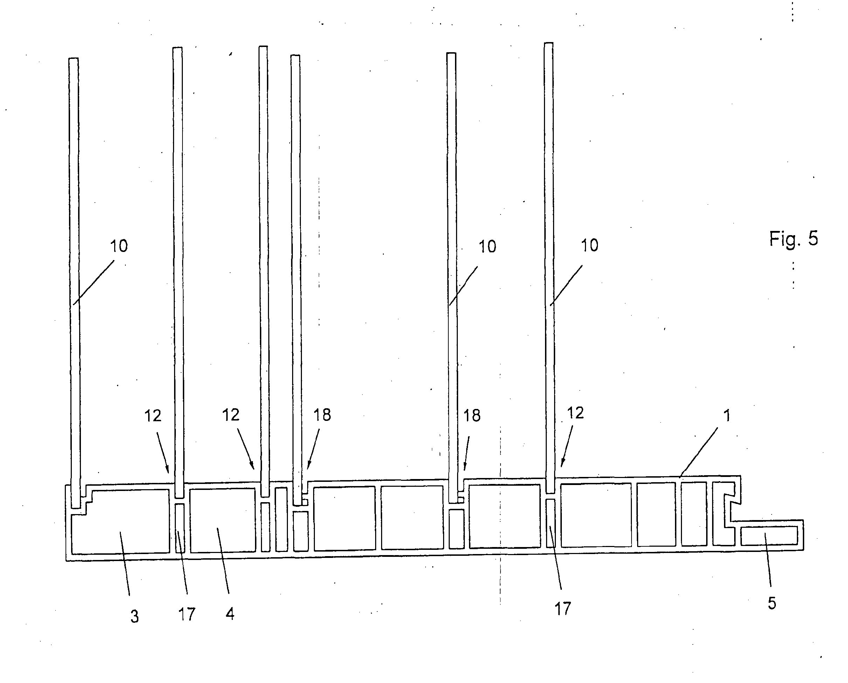

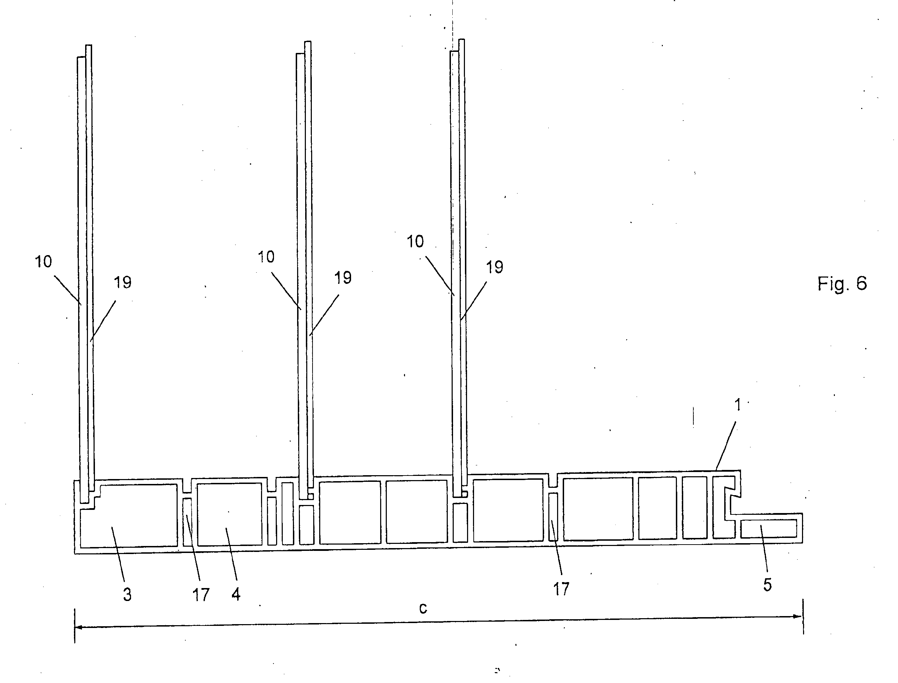

Die Erfindung wird nachfolgend anhand von in der Zeichnung schematisch dargestellten Ausführungsbeispielen näher erläutert. In dieser zeigen Fig. 1 eine perspektivische Darstellung von Kammerprofilplatten, Eckverbindern und Rückwand vor dem Zusammenbau, Fig. 2 eine vergrößerte Darstellung eines Teiles der Fig. 1, Fig. 3 den Installationskasten entsprechend den Fig. 1 und 2 im zusammengebauten Zustand, Fig. 4 ein vergrößertes Detail des Installationskastens nach Fig. 3, Fig. 5 eine Kammerprofilplatte mit in Nuten eingesteckten Wandelementen und Fig. 6 eine Kammerprofilplatte entsprechend der Fig. 5 mit in abgestuften Nuten eingesteckten Schiebewandelementen.

Bei der Ausbildung nach Fig. 1 ist mit 1 eine Kammerprofilplatte bezeichnet, deren in Längsrichtung entsprechend dem Doppelpfeil 2 verlaufende Kammern 3, 4 und 5 für die Aufnahme von Steckprofilen 6, 7 und 8 eines Eckverbinders 9 geeignet sind. Mit 10 ist ein Rückwandteil beizeichnet, welcher in eine entsprechende Nut 11 der Kammerprofilplatten 1 eingelegt werden kann und auf die Art und Weise nach dem Zusammenbau mit den Eckverbindern 9 unmittelbar eine exakt orientierte und festgelegte Kastenform mit Rückwand ergibt. Mit 12 sind in Längsrichtung, d.h. in Richtung des Doppelpfeils 2 der Kammerprofilplatten 1 verlaufende Nuten bezeichnet, wobei die Details in den nachfolgenden Figuren noch näher beschrieben werden.

In Fig. 2 ist nahe dem stirnseitigen Ende der Kammerprofilplatten 1 jeweils eine Ausnehmung 13 bei einer Anzahl von in Längsrichtung verlaufenden Kammern 3 und 4 ersichtlich, in welche Vorsprünge 14 der Steckprofile 6 und 7 einrasten. Die Steckprofile der Eckverbinder 9 sind hierbei über die Länge b der Eckverbinder unsymmetrisch verteilt, wobei bei den Nuten 12 der Kammerprofilplatten 1 entsprechende Ecknuten 15 vorgesehen sind, sodass beim Zusammenbau eine sichere Verankerung und Festlegung von Wandelementen ermöglicht wird. In Fig. 3 ist der vollständige Installationskasten 16 in zusammengebautem Zustand ersichtlich und nach dem Einstecken der Eckverbinder 9 in die entsprechenden stirnseitigen Ausnehmungen der Kammerprofilplatten 1 auch die Rückwand 10 sicher in den entsprechenden Nuten gehalten wird. In Fig. 4 sind die jeweiligen Bauteile vergrößert dargestellt, wobei die Vorsprünge 14 in den Ausnehmungen 13 der Kammerprofilplatten 1 verrastet sind. Bei der Darstellung nach Fig. 5 ist die Kammerprofilplatte 1 im Querschnitt dargestellt, und es ist ersichtlich, dass eine Mehrzahl von Kammern 3, 4 und 5 mit voneinander verschiedenem lichten Querschnitt vorgesehen sind. Auch die weiteren sich in Längsrichtung der Kammerprofilplatte erstreckenden Kammern haben teilweise voneinander abweichenden Querschnitt, wobei beispielsweise in Kammern, wie sie in Fig. 5 mit 17 bezeichnet sind, Versteifungselemente in Form von Bandstahl eingelegt werden können. Bei der Darstellung nach Fig. 5 sind weiters die Nuten 12 ersichtlich, in welche Zwischen- oder Rückwandelemente 10 eingesetzt sind. Je nach Tiefe der Nuten können größere oder kleinere Elemente 10 zum Einsatz gelangen, wobei die Nuten 18 gestuft ausgebildet sind und somit neben einer eingesteckten Wandplatte 10 noch Platz für eine weitere Wandplatte bieten, wie es schematisch in Fig. 6 dargestellt ist, wobei die weitere Wandplatte 19 relativ zur Wandplatte 10 verschiebbar sein kann und somit ein Schiebewandelement ausbilden.

Naturgemäß können, den Wänden 10 bzw. 19 benachbart, die Kammerprofilplatten ebenso wie der zugehörige Eckverbinder einfach getrennt werden, wofür ein Sägeschnitt genügt. Auf diese Art kann die Tiefe c bzw. die Breite der Platten entsprechend variiert werden, und es können Installationskästen unterschiedlicher Tiefe hergestellt werden. Den jeweils maximal zulässigen Belastungen kann ein entsprechendes Auffüllen von Kammern mit Versteifungselementen Rechnung getragen werden, wobei diese Versteifungselemente beispielsweise in schmale Kammern 17 in Form von Bandstahlstangen eingesteckt werden können.

## Patentansprüche

1. Installationskasten, wie z.B. Elektrokasten, Elektrozählerkasten, Gaszählerkasten od. dgl., mit Seitenwänden, welche eine umlaufende Kastenwand ausbilden, und Eckverbindern zum Verbinden der Seitenwände, wobei die Seitenwände von Kammerprofilplatten (1) mit einer Mehrzahl von parallel zur Plattenebene verlaufenden Kammern (3,4,5) gebildet sind und die Eckverbinder (9) mit dem Querschnitt wenigstens eines Teiles der Kammerquerschnitte entsprechenden Steckprofilen (6,7,8) ausgebildet sind, welche in stirnseitige Öffnungen der Kammern (3,4,5) einsteckbar sind, wobei eine Mehrzahl von Kammern (3,4,5) der die Seitenwände bildenden Kammerprofilplatten mit voneinander verschiedenen Querschnitten vorgesehen ist, **dadurch gekennzeichnet, dass** zwischen einzelnen oder einer Gruppe von gleichen Querschnitt aufweisenden Kammern über die Breite der Kammerprofilplatten (1) verteilt Kammer mit von diesen Querschnitten verschiedenen Querschnitten angeordnet sind, wobei weiters die Kammerprofilplatten (1) der Seitenwände an einer Seite parallel zur Achse von Kammern (3,4,5) verlaufende Nuten (11,12,18) aufweisen und dass ein Teil der in Achsrichtung der Kammern (3,4,5) verlaufenden Nuten (11,12,18) gestuft ausgebildet ist und wenigstens zwei jeweils benachbarte unterschiedliche Nuttiefen ausbildet.

2. Installationskasten nach Anspruch 1, **dadurch gekennzeichnet, dass** zwischen Steckprofilen (6,7,8) der Eckverbinder (9) Nuten für die Aufnahme von ebenen Wandteilen (10,19) angeordnet sind, welche in Nuten der Kammerprofilplatten (1) eintauchen.

3. Installationskasten nach Anspruch 1 oder 2, **dadurch gekennzeichnet, dass** ein Teil der Kammerprofile (17) mit gegenüber den stirnseitig offenen Kammern (3,4,5) für die Aufnahme von Steckprofilen (6,7,8) der Eckverbinder (9) kleinerem Querschnitt für die Aufnahme von Verstärkungsbändern bzw. Versteifungsstäben ausgebildet ist.

4. Installationskasten nach Anspruch 1, 2 oder 3, **dadurch gekennzeichnet, dass** die Steckprofile (6,7,8) der Eckverbinder (9) und die Wände der Kammerprofilplatten (1) miteinander zusammenwirkende Verriegelungsglieder (13,14), insbesondere Vorsprünge und Ausnehmungen für die Aufnahme der Vorsprünge, aufweisen.

5. Kammerprofilplatte nach einem der Ansprüche 1 bis 4 für den Zusammenbau mit steckbaren Eckverbindern zur Ausbildung eines Installationskastens.

6. Kammerprofilplatte nach einem der Ansprüche 1 bis 5, **dadurch gekennzeichnet, dass** die Steckprofile (6,7,8) der Eckverbinder elastisch verformbar und in wenigstens einer Achse quer zur Einstreckrichtung (6,7,8) komprimierbar ausgebildet ist.

7. Eckverbinder nach einem der Ansprüche 1 bis 6 für den Zusammenbau mit Kammerprofilplatten (1) zur Ausbildung eines Installationskastens (16).

8. Eckverbinder nach Anspruch 7, **dadurch gekennzeichnet, dass** der Querschnitt der Steckprofile (6,7) elastisch verformbar bzw. komprimierbar ausgebildet ist.

## Claims

1. An installation box such as an electric box, an electric meter box, a gas meter box or the like, including side walls forming a peripheral box wall and corner connectors for connecting the side walls, wherein the side walls are formed by chamber profile plates (1) having a plurality of chambers (3,4,5) extending in parallel with the plane of the plate, and wherein the corner connectors (9) are formed with plug profiles (6,7,8) corresponding to the cross section of at least part of the chamber cross sections, which plug profiles are capable of being plugged into the front-side openings of the chambers (3,4,5), wherein a plurality of chambers (3,4,5) of the chamber profile plates forming the side walls are provided with mutually different cross sections, **characterized in that** between individual chambers, or a group of chambers having identical cross sections, chambers having cross section differing from said cross sections are arranged so as to be distributed over the widths of the chamber profile plates (1), wherein, moreover, the chamber profile plates (1) of the side walls on one side comprise grooves (11,12,18) extending in parallel with the axes of chambers (3,4,5), and that part of the grooves (11,12,18) extending in the axial direction of the chambers (3,4,5) are designed to be stepped, forming at least two different groove depths each adjacent to each other.

2. An installation box according to claim 1, **characterized in that** grooves for receiving flat wall parts (10,19) that reach into grooves of the chamber profile plates (1) are provided between plug profiles (6,7,8) of the corner connectors (9).

3. An installation box according to claim 1 or 2, **characterized in that** part of the chamber profiles (17), for receiving reinforcing tapes or reinforcing rods, are formed with smaller cross sections relative to those of the chambers (3,4,5) that are open on their front side for receiving plug profiles (6,7,8) of the corner connectors (9).

4. An installation box according to claim 1, 2 or 3, **characterized in that** the plug profiles (6,7,8) of the corner connectors (9) and the walls of the chamber profile plates (1) comprise mutually interacting locking members (13,14), in particular projections and recesses for receiving said projections.

5. A chamber profile plate according to any one of claims 1 to 4 for assembly with pluggable corner connectors for forming an installation box.

6. A chamber profile plate according to any one of claims 1 to 5, **characterized in that** the plug profiles (6,7,8) of the corner connectors are designed to be elastically deformable and compressible in at least one axis transverse to the plug-in direction (6,7,8).

7. A corner connector according to any one of claims 1 to 6 for assembly with chamber profile plates (1) for forming an installation box (16).

8. A corner connector according to claim 7, **characterized in that** the cross sections of the plug profiles (6,7) are designed to be elastically deformable or compressible.

## Revendications

1. Boîte de montage, par exemple, boîte électrique, boîte de compteur d'électricité, boîte de compteur de gaz ou analogue, comprenant des parois latérales qui forment une paroi périphérique de boîte et des raccords d'angle servant à assembler les parois latérales, les parois latérales étant formées de plaques profilées à chambres (1) qui comportent plusieurs chambres (3, 4, 5) s'étendant parallèlement au plan de la plaque, les raccords d'angle (9) étant munis de profilés mâles (6, 7, 8) qui correspondent à la section transversale d'au moins une partie des sections transversales de chambres et qui peuvent être emboîtés dans des ouvertures frontales des chambres (3, 4, 5), plusieurs chambres (3, 4, 5) des plaques profilées à chambres qui forment les parois latérales présentant des sections transversales différentes les unes des autres, **caractérisée en ce qu'**entre des chambres isolées ou appartenant à un groupe de chambres présentant la même section transversale, sont disposées, réparties sur la largeur des plaques profilées à chambres (1), des chambres ayant des sections transversales différentes de ces sections, les plaques profilées à chambres (1) des parois latérales présentant par ailleurs, sur un côté, des rainures (11, 12, 18) qui s'étendent parallèlement à l'axe des chambres (3, 4, 5), et **en ce que** certaines des rainures (11, 12, 18) s'étendant dans la direction de l'axe des chambres (3, 4, 5) sont étagées et forment au moins deux profondeurs de rainure différentes, l'une à côté de l'autre, respectivement.

2. Boîte de montage selon la revendication 1, **caractérisée en ce qu'**entre des profilés mâles (6, 7, 8) des raccords d'angle (9) sont formées des rainures destinées à recevoir des parties de parois planes (10, 19) qui s'emboîtent dans des rainures des plaques profilées à chambres (1).

3. Boîte de montage selon la revendication 1 ou 2, **caractérisée en ce qu'**une partie des profilés à chambres (17) qui présentent une plus petite section transversale, comparativement aux chambres (3, 4, 5) ouvertes côté frontal destinées à recevoir des profilés mâles (6, 7, 8) des raccords d'angle (9), est conçue pour recevoir des bandes de renfort ou des barres raidisseuses.

4. Boîte de montage selon la revendication 1, 2 ou 3, **caractérisée en ce que** les profilés mâles (6, 7, 8) des raccords d'angle (9) et les parois des plaques profilées à chambres (1) présentent des organes de verrouillage (13, 14) coopérant entre eux, en particulier des saillies et des évidements destinés à recevoir les saillies.

5. Plaque profilée à chambres selon l'une des revendications 1 à 4, destinée à être assemblée au moyen de raccords d'angle mâles pour former une boîte de montage.

6. Plaque profilée à chambres selon l'une des revendications 1 à 5, **caractérisée en ce que** le profilé mâle (6, 7, 8) des raccords d'angle est élastiquement déformable et compressible dans au moins un axe, transversalement à la direction d'emboîtement (6, 7, 8).

7. Raccord d'angle selon l'une des revendications 1 à 6, pour l'assemblage à des plaques profilées à chambres (1) pour former une boîte de montage (16).

8. Raccord d'angle selon la revendication 7, **caractérisé en ce que** la section transversale des profilés mâles (6, 7) est élastiquement déformable ou compressible.
